# EUROPÄISCHE PATENTSCHRIFT

(11) **EP 1 036 716 B1**
(45) Veröffentlichungstag und Bekanntmachung des Hinweises auf die Patenterteilung: **10.09.2003**
(21) Anmeldenummer: 00100619.6
(22) Anmeldetag: 13.01.2000
(51) Int. Cl.: B60R 21/20

(54) **Innenverkleidungsteil, insbesondere Instrumententafel für Kraftfahrzeuge**
Interior trim panel, instrument panel for a vehicle in particular
Garniture intérieure, en particulier tableau de bord pour véhicule

(30) Priorität: 18.03.1999 DE 19912107
(43) Veröffentlichungstag der Anmeldung: 20.09.2000
(73) Patentinhaber: Dr.Ing. h.c.F. Porsche Aktiengesellschaft, 70435 Stuttgart (DE)
(72) Erfinder: Eichhorn, Horst, 71732 Tamm (DE); Gayer, Bernd, 71287 Weissach (DE); Linder, Leo, 89269 Vöhringen (DE)

(56) Entgegenhaltungen:
- DE-A- 19 623 579
- US-A- 5 498 027
- US-A- 5 544 912
- PATENT ABSTRACTS OF JAPAN vol. 1996, no. 08, 30. August 1996 (1996-08-30) & JP 08 091163 A (TOYOTA MOTOR CORP), 9. April 1996 (1996-04-09)

## Beschreibung

Die Erfindung bezieht sich auf ein Innenverkleidungsteil, insbesondere eine Instrumententafel für Kraftfahrzeuge, gemäß dem Oberbegriff des Patentanspruchs 1.

Aus der EP 0 771 695 A1 geht ein Innenverkleidungsteil, insbesondere eine Instrumententafel für Kraftfahrzeuge hervor, die aus einem mit einer Folie überzogenen Träger besteht, der integral ausgebildet ist mit einer die Öffnung für den Durchtritt eines Airbags bei dessen Auslösung abdeckenden Klappe, die von der Folie mit überdeckt ist und durch eine Schwächung und/oder Perforation entlang ihres Randes markiert ist.

Aufgabe der Erfindung ist es, ein Innenverkleidungsteil der eingangs genannten Gattung so weiterzuentwickeln, daß es auf der dem Fahrgastraum zugekehrten Seite mit einer Dekorschicht versehen werden kann, wobei trotz der aufkaschierten Dekorschicht ein schnelles und definiertes Öffnen der Klappe beim Auslösen des Airbags gewährleistet ist und daß die Schwächung und/oder Perforation der Klappe vom Fahrgastraum aus nicht sichtbar ist.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß das Innenverkleidungsteil in einfacher Weise mit einer Dekorschicht aus Leder oder dergleichen versehen werden kann, wobei die Dekorschicht im Bereich der Aufreißlinie nicht mit einer Perforierung durch einen Laser versehen werden muß, sondern nur örtlich geschlitzt wird, wobei die einer theoretischen Klappachse der Klappe abgekehrten geschlitzten Bereiche durch eine aufgesetzte Leiste abgedeckt werden. Der querverlaufende geschlitzte Bereich und die beiden, eine geringe Länge aufweisenden aufrechten geschlitzten Bereiche an der Dekorschicht wirken als definierte Aufreißlinie beim Auslösen des Airbags, so daß die vorzugsweise lederbezogene integrale Klappe schnell und definiert öffnet. In der Ruhestellung des Airbags ist somit vom Fahrgastraum aus keine Aufreißlinie an der Instrumententafel erkennbar.

Ein Ausführungsbeispiel der Erfindung ist in den Zeichnungen dargestellt und wird im folgenden näher beschrieben.

Es zeigen
- Fig. 1: eine perspektivische Teilansicht auf ein durch eine Instrumententafel gebildetes Innenverkleidungsteil für ein Kraftfahrzeug mit einer integralen Klappe für einen Airbag,

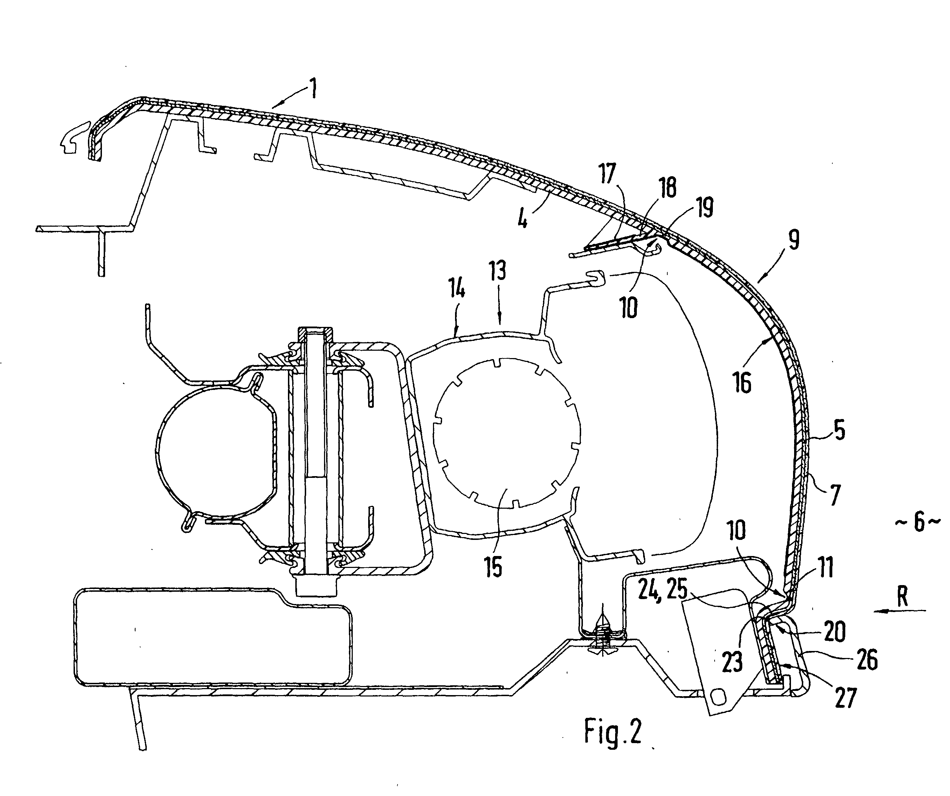

- Fig. 2: einen Schnitt nach der Linie II-II der Fig. 1 in größerer Darstellung und

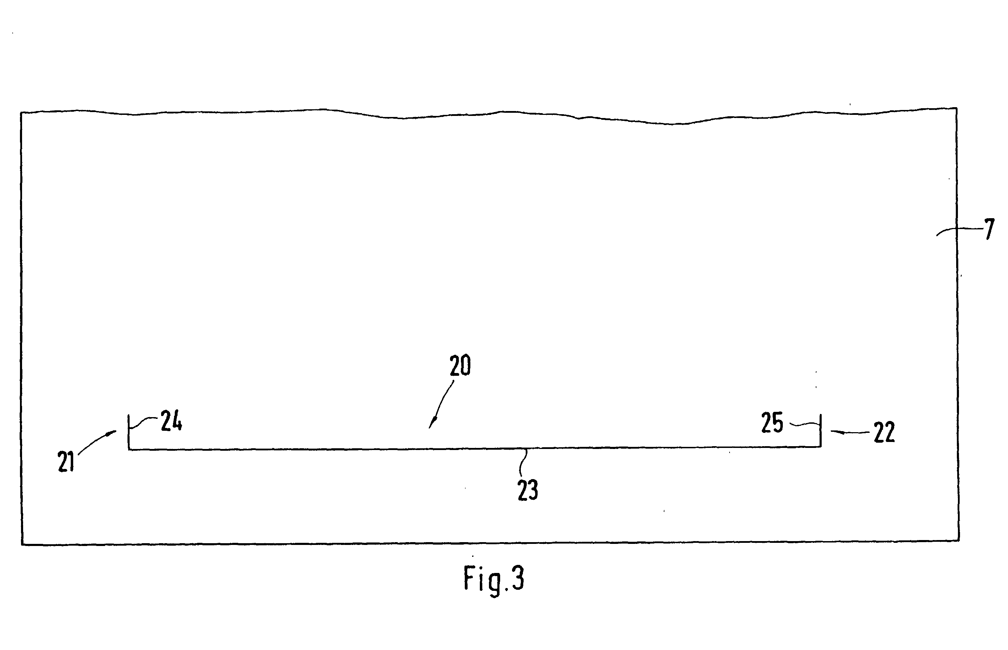

- Fig. 3: eine Ansicht in Pfeilrichtung R der Fig. 2, wobei die geschlitzten Bereiche in gestreckter Stellung der Dekorschicht dargestellt sind.

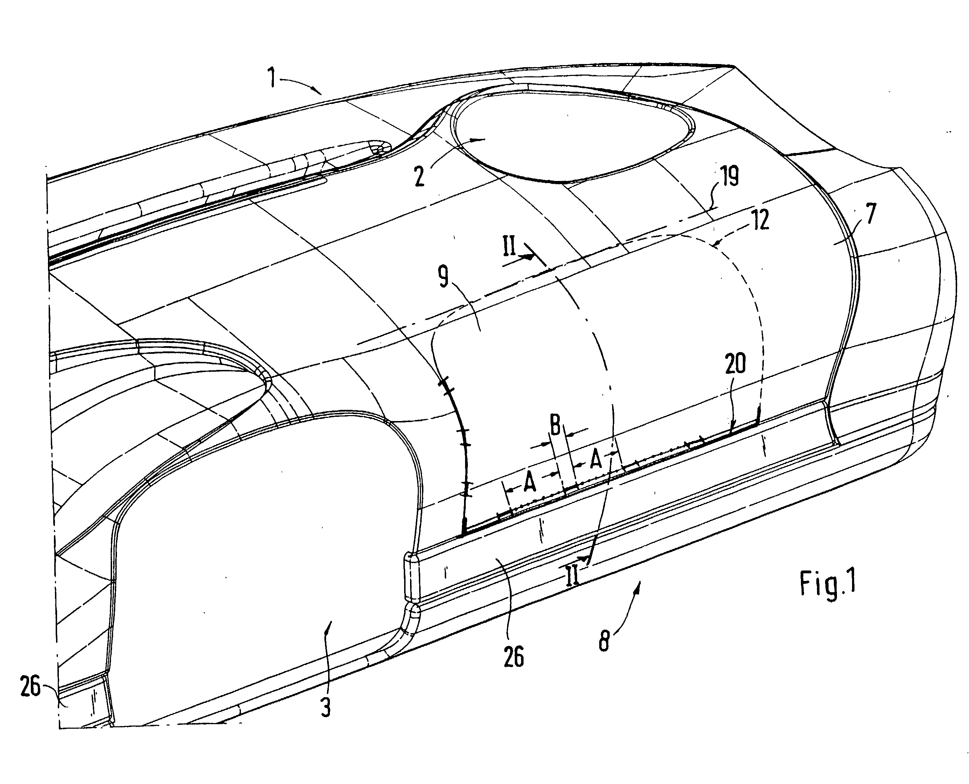

Fig. 1 zeigt bereichsweise eine ein Innenverkleidungsteil bildende Instrumententafel 1 für ein Kraftfahrzeug, wobei in eine obere seitliche Ausnehmung 2 ein nicht näher dargestellter Lautsprecher und in eine mittige untere Ausnehmung 3 eine nicht gezeigte Bedieneinheit einsetzbar sind.

Die Instrumententafel 1 besteht aus einem Träger 4, der mit einer Folie 5 überzogen ist. Der Träger 4 wird durch ein gespritztes Thermoplast (z.B. PP) gebildet und weist eine Dicke von 2 bis 2,5 mm auf.

Im Ausführungsbeispiel ist als Folie 5 eine Kombischaumfolie vorgesehen, die sich aus einer Schaumlage und einer Deckschicht zusammensetzt. Ferner weist die Instrumententafel 1 auf der einen Fahrgastraum 6 zugekehrten Seite eine Dekorschicht 7 auf, die auf die Folie 5 aufkaschiert ist. Die Dekorschicht 7 besteht vorzugsweise aus Leder. Sie könnte jedoch auch durch Kunstleder, eine TPO-Folie oder dergleichen gebildet werden.

Auf der Beifahrerseite 8 der Instrumententafel 1 ist eine mit dem Träger 4 integrale Klappe 9 angeordnet, deren Umfang durch eine Schwächung 10 und/oder eine Perforation 11 markiert ist. Die Schwächung 10 und/oder die Perforation 11 bilden eine definierte Aufreißlinie 12 für die Klappe 9. Hinter der Klappe 9 ist innerhalb der Instrumententafel 1 ein Airbag 13 angeordnet, der sich in herkömmlicher Weise aus einem Gehäuse 14, einer Aufblaseinrichtung 15 und einem nicht näher dargestellten aufblasbaren Gassack zusammensetzt.

Die Klappe 9 ist auf der dem Fahrgastraum 6 abgekehrten Seite mit einem dünnwandigen Trägerteil 16 aus Stahl- oder Alublech oder mit einem aufgeschweißten Kunststoff-/Kevlargewebe versehen, wobei ein U-förmig ausgebildeter abgebogener oberer Endbereich 17 des Trägerteils 16 einen abgestellten Steg 18 des Trägers 4 endseitig umgibt. Die Schwächung 10 des Trägers 4 ist durch eine umlaufende rinnenförmige Querschnittsverringerung gebildet, wodurch eine definierte Aufreißlinie 12 für die Klappe 9 vorgegeben ist.

Durch das innenliegende Trägerteil 16 mit dem U-förmig ausgebildeten oberen Endbereich 17 und den oberen querverlaufenden Bereich der rinnenförmigen Querschnittsverringerung wird quasi eine theoretische Klappachse 19 für die beim Auslösen des Airbags 13 sich nach oben öffnende Klappe 9 gebildet. Ferner werden der Träger 4 und die vorgelagerte Folie 5 gemeinsam entlang der die Aufreißlinie 12 definierenden Querschnittsverringerung stellenweise durch einen Laser perforiert und zwar dergestalt, daß sich zwischen zwei beabstandeten perforierten Zonen A jeweils eine unperforierte Zone B erstreckt. Die Perforation 11 erstreckt sich entlang des unteren Randes und der beiden seitlichen Ränder der Klappe 9.

Die Dekorschicht 7 aus Leder weist jedoch keine Perforation 11 durch einen Laser auf. Damit die mit einer Dekorschicht 7 aus Leder versehene Klappe 9 der Instrumententafel 1 beim Auslösen des Airbags 13 schnell und definiert öffnet, ist vorgesehen, daß die Dekorschicht 7 aus Leder auf der der theoretischen Klappachse 19 abgekehrten Seite 20 der Klappe 9 sowie an beiden angrenzenden seitlichen Rändern 21, 22 geschlitzt ist, wobei die geschlitzten Bereiche 23, 24, 25 durch eine aufgesetzte, querverlaufende Leiste 26 zum Fahrgastraum 6 hin abgedeckt sind. Die Instrumententafel 1 weist im Bereich der aufgesetzten Leiste 26 eine Einprägung 27 auf.

Im Ausführungsbeispiel ist die Klappachse 19 am oberen Rand der Klappe 9 vorgesehen und der geschlitzte Bereich der Dekorschicht 7 erstreckt sich durchgehend benachbart dem querverlaufenden unteren Randbereich der Klappe 9 sowie bereichsweise an beiden aufrechten Seiten der Klappe 9. Die seitlichen geschlitzten Bereiche 24, 25 sind jeweils quer nur etwa 8 bis 10 mm lang und schließen unmittelbar an den durchgehenden, querverlaufenden geschlitzten Bereich 23 an.

Im Ausführungsbeispiel liegt der querverlaufende geschlitzte untere Bereich 23 der Dekorschicht 7 aus Leder geringfügig tiefer als der angrenzende untere Rand der Klappe 9, der durch die Schwächung 10 definiert ist.

Im Ausführungsbeispiel ist die Dekorschicht 7 aus Leder für die Instrumententafel 1 im Bereich der Leiste 26 getrennt in ein Oberteil und ein Unterteil, wobei die Trennstelle durch die Leiste 26 abgedeckt ist.

Die erfindungsgemäße Anordnung könnte aber auch in der Türverkleidung oder einer Seitenwandverkleidung vorgesehen sein, wenn dort ein Airbag für den Fahrer, den Beifahrer oder die Fondpassagiere untergebracht ist.

## Patentansprüche

1. Innenverkleidungsteil, insbesondere Instrumententafel für Kraftfahrzeuge, bestehend aus einem mit einer Folie überzogenen Träger, der integral ausgebildet ist mit einer die Öffnung für den Durchtritt eines Airbags bei dessen Auslösung abdeckenden Klappe, die von der Folie mit überdeckt ist und durch eine Schwächung und/oder eine Perforation entlang ihres Randes markiert ist, **dadurch gekennzeichnet, daß** das Innenverkleidungsteil auf der einem Fahrgastraum (6) zugekehrten Seite mit einer aufkaschierten Dekorschicht (7) versehen ist, wobei die Dekorschicht (7) nur auf der einer theoretischen Klappachse (19) gegenüberliegenden Seite (20) sowie bereichsweise an beiden angrenzenden aufrechten Seiten der Klappe (9) geschlitzt ist und **daß** die geschlitzten Bereiche (23, 24, 25) der Dekorschicht (7) durch eine aufgesetzte Leiste (26) abgedeckt sind.

2. Innenverkleidungsteil nach Anspruch 1, **dadurch gekennzeichnet, daß** sich die theoretische Klappachse (19) der Klappe (9) am oberen querverlaufenden Rand der Klappe (9) erstreckt.

3. Innenverkleidungsteil nach den Ansprüchen 1 und 2, **dadurch gekennzeichnet, daß** benachbart dem unteren Rand der Klappe (9) und an beiden angrenzenden aufrechten Längsseiten an der Dekorschicht (7) die geschlitzten Bereiche (23, 24, 25) vorgesehen sind.

4. Innenverkleidungsteil nach einem der vorhergehenden Ansprüche, **dadurch gekennzeichnet, daß** der untere, querverlaufende geschlitzte Bereich (23) der Dekorschicht (7) vorzugsweise durchgehend ausgebildet ist.

5. Innenverkleidungsteil nach einem der vorhergehenden Ansprüche, **dadurch gekennzeichnet, daß** die beiden seitlichen geschlitzten Bereiche (24, 25) etwa rechtwinkelig zum querverlaufenden geschlitzten Bereich (23) ausgerichtet sind und unmittelbar an diesen anschließen.

6. Innenverkleidungsteil nach Anspruch 5, **dadurch gekennzeichnet, daß** die seitlichen geschlitzten Bereiche (24, 25) eine Längserstreckung von etwa 8 bis 10 mm aufweisen.

7. Innenverkleidungsteil nach einem der vorhergehenden Ansprüche, **dadurch gekennzeichnet, daß** die Klappe (9) über ein dünnwandiges innenliegendes Trägerteil (16) an einem abgestellten Steg (18) des Trägers (4) der Instrumententafel (1) angeschlossen ist.

8. Innenverkleidungsteil nach Anspruch 1, **dadurch gekennzeichnet, daß** die Dekorschicht (7) aus Leder besteht.

## Claims

1. An interior lining panel, in particular an instrument panel for motor vehicles, comprising a support covered by a film and formed integrally with a flap which covers the opening for the passage of an airbag upon the release thereof and which is jointly covered by the film and is marked by a weakening and/or a perforation along its edge, **characterized in that** the side of the interior lining panel facing the passenger compartment (6) is provided with a bonded-on decorative coating (7), wherein the decorative coating (7) is slotted only on the side (20) opposite a theoretical axis (19) of the flap and in part on the two adjoining vertical sides of the flap (9), and the slotted regions (23, 24, 25) of the decorative coating (7) are covered by a strip (26) placed thereon.

2. An interior lining panel according to Claim 1, **characterized in that** the theoretical axis (19) of the flap (9) extends on the upper, transversely extending edge of the flap (9).

3. An interior lining panel according to Claims 1 and 2, **characterized in that** the slotted regions (23, 24, 25) are provided on the decorative coating (7) adjacent to the lower edge of the flap (9) and on the two adjoining vertical longitudinal sides.

4. An interior lining panel according to one of the preceding Claims, **characterized in that** the lower, transversely extending slotted region (23) of the decorative coating (7) is preferably continuous.

5. An interior lining panel according to one of the preceding Claims, **characterized in that** the two lateral slotted regions (24, 25) are orientated substantially at right angles to the transversely extending slotted region (23) and directly adjoin the latter.

6. An interior lining panel according to Claim 5, **characterized in that** the lateral slotted regions (24, 25) have a longitudinal extension of substantially from 8 to 10 mm.

7. An interior lining panel according to one of the preceding Claims, **characterized in that** the flap (9) is attached to a projecting web (18) of the support (4) of the instrument panel (1) by way of a thin-walled support part (16) situated on the inside.

8. An interior lining panel according to Claim 1, **characterized in that** the decorative coating (7) consists of leather.

## Revendications

1. Elément d'habillage intérieur, en particulier tableau de bord de véhicule automobile, constitué d'un support recouvert d'une feuille qui est réalisé d'un bloc avec un abattant recouvrant l'ouverture de passage d'un sac gonflable, lors de son déclenchement, lequel clapet est recouvert aussi par la feuille et est marqué par un affaiblissement et/ou une perforation le long de son bord, **caractérisé en ce que** l'élément d'habillage intérieur est pourvu, sur le côté tourné vers un habitacle (6), d'une couche décorative (7) contreplaquée, la couche décorative (7) n'étant pourvue de fente que sur un côté (20) opposé à un axe théorique (19) de l'abattant, ainsi que par endroits sur les deux côtés verticaux adjacents de l'abattant (9), et **en ce que** les zones à fente (23, 24, 25) de la couche décorative (7) sont recouvertes par une baguette (26) placée dessus.

2. Elément d'habillage intérieur selon la revendication 1, **caractérisé en ce que** l'axe théorique (19) de l'abattant (9) s'étend sur le bord transversal supérieur de l'abattant (9).

3. Elément d'habillage intérieur selon les revendications 1 et 2, **caractérisé en ce qu'**au voisinage du bord inférieur de l'abattant (9) et sur les deux côtés longitudinaux verticaux adjacents, sont prévues les zones à fente (23, 24, 25) de la couche décorative (7).

4. Elément d'habillage intérieur selon l'une des revendications précédentes, **caractérisé en ce que** la zone inférieure (23) à fente s'étendant transversalement de la couche décorative (7) est réalisée de préférence continue.

5. Elément d'habillage intérieur selon l'une des revendications précédentes, **caractérisé en ce que** les deux zones à fente (24, 25) latérales sont orientées approximativement à angle droit par rapport à la zone à fente (23) transversale et font directement suite à celle-ci.

6. Elément d'habillage intérieur selon la revendication 5, **caractérisés en ce que** les zones à fente (24, 25) latérales présentent une longueur d'environ 8 à 10 mm.

7. Elément d'habillage intérieur selon l'une des revendications précédentes, **caractérisé en ce que** l'abattant (9) est raccordé, par une partie de support (16) à paroi mince située à l'intérieur, à une barrette (18) saillante du support (4) du tableau de bord (1).

8. Elément d'habillage intérieur selon la revendication 1, **caractérisé en ce que** la couche décorative (7) est en cuir.
